# EUROPÄISCHE PATENTSCHRIFT

(11) **EP 3 630 470 B1**
(45) Veröffentlichungstag und Bekanntmachung des Hinweises auf die Patenterteilung: **07.01.2026**
(21) Anmeldenummer: 18727271.1
(22) Anmeldetag: 24.05.2018
(51) Int. Cl.: B29C 70/72, B29C 70/02, F17C 1/16, B29C 70/68, F17C 1/02, B32B 9/04, B32B 27/08, F17C 1/00, B32B 27/38, F17C 1/06, B32B 7/12, B32B 5/02, B32B 27/34, B32B 27/12, B32B 1/00

(54) **ROBUSTER HOCHDRUCKBEHÄLTERAUFBAU MIT FÜGEMITTEL**
ROBUST HIGH-PRESSURE CONTAINER STRUCTURE HAVING JOINING MEANS
CONSTRUCTION ROBUSTE D'UN RÉCIPIENT SOUS PRESSION À L'AIDE D'UN AGENT D'ASSEMBLAGE

(30) Priorität: 02.06.2017 DE 102017209378
(43) Veröffentlichungstag der Anmeldung: 08.04.2020
(73) Patentinhaber: AUDI AG, 85045 Ingolstadt (DE)
(72) Erfinder: EIDMANN, Florian, 74613 hringen (DE)
(86) Internationale Anmeldenummer: PCT/EP2018/063663
(87) Internationale Veröffentlichungsnummer: WO 2018/219780

(56) Entgegenhaltungen:
- WO-A1-2016/069675
- DE-C1- 3 426 158
- US-A- 5 429 845

## Beschreibung

Die vorliegende Erfindung betrifft ein Verfahren und einen Druckbehälter, bei dem ein Fügemittel zwischen verschiedenen Lagen eines Druckbehälteraufbaus eingesetzt wird, um einen robusten Druckbehälter zu erhalten.

Druckbehälter finden zur Speicherung von gasförmigen oder flüssigen Stoffen Verwendung. Im Automobilbau werden sie als Tank zur Mitführung von gasförmigem Wasserstoff in Druckbereichen von mehreren 100 bar eingesetzt. Als Form wird in Abwandlung von der eigentlich idealen Kugel gemeinhin ein zylindrischer Mittelteil mit gewölbten Abschlüssen zu beiden Seiten gewählt. Aufgebaut ist ein solcher Druckbehälter aus einem Innenbehälter, dem sogenannten Liner, der meist aus Kunststoffen wie HDPE (High density Polyethylen) oder PA6.6 (Nylon) besteht und zentral an mindestens einem der beiden gewölbten Abschlüsse eine Öffnung besitzt. In diese mindestens eine Öffnung ist ein zumeist metallischer Eingangskörper, ein sogenannter Boss, eingefügt, in den ein Ventil eingeschraubt und ein Austausch eines eingefüllten Gases stattfinden kann. Der Außenbehälter wird durch Umwicklung des Innenbehälters samt Boss mit einem Verbundwerkstoff, z.B. harzgetränkte Karbonfasern, aufgebaut. Während der Innenbehälter vor allem einer Dichtigkeit das eingefüllte Gas betreffend dient, ist der Außenbehälter für eine Druckstabilität und für eine Stoßfestigkeit gegenüber äußeren Einflüssen zuständig.

Die Druckschrift DE 603 15 481 T2 beschreibt einen Druckbehälter zur Aufbewahrung kryogener Stoffe, aber auch von unter Druck stehendem Wasserstoff bei Umgebungstemperatur, bei dem der Außenbehälter von dem Innenbehälter beabstandet aufgebaut ist und sich zwecks Wärmeisolierung in dem Zwischenraum ein Vakuum befindet. Zusätzlich ist der Innenbehälter an seiner Außenfläche mit einer Isolierschicht umgeben.

Der in der Druckschrift DE 11 2004 000 261 B4 offenbarte Druckbehälter ist für kryogene Flüssigkeiten ausgelegt. Außen- wie Innenbehälter sind jeweilig aus einzelnen faserverstärkten Bauteilen zusammengesetzt, die aus einem zylindrischen Mittelteil und den gewölbten Abschlüssen zur jeweiligen Seite bestehen und überlappend verbunden werden. An den Verbindungsstellen sorgen ebenfalls aus faserverstärktem Kunststoff gewickelte Stege für eine Beabstandung von Außen- und Innenbehälter. An den jeweiligen Stellen mit überlappenden Bauteilen und aufgewickelten Stegen können sich Klebungen befinden.

Aus der Druckschrift EP 2 238 047 B1 geht ein Verbundbehälter hervor, in dessen formstabilen Außenbehälter Teile eines flexiblen Innenbehälters geklebt wurden. Die jeweiligen Kontaktflächen können beide, oder aber nur eine davon, Aussparungen zur Aufnahme des Klebstoffs aufweisen. Die Klebeflächen sollen dem im Behälter auftretenden Druck standhalten und dienen im Wesentlichen dazu, die gewünschte Anordnung des Innenbehälters im Außenbehälter beim Fertigungsprozess zu unterstützen, oder ungewollte Ablösungen des Innenbehälters vom Außenbehälter bei einem Entleerungsvorgang zu vermeiden.

Die Druckschrift US 5 429 845 A beschreibt einen sogenannten Boss bzw. ein Bauteil zur Aufnahme eines Ventils eines Druckbehälters, der eine filamentgewickelte Außenhülle und eine nichtmetallische Innenauskleidung aufweist. Der Boss weist einen röhrenförmigen Hals auf, der aus einem Inneren des Druckbehälters nach außen ragt, und einen ringförmigen Stützflansch, der sich radial vom inneren Ende des Halses erstreckt und einen Umfang einer polaren Öffnung des Druckbehälters trägt.

Aus der unterschiedlichen Materialwahl bzw. Struktur für Außen- und Innenbehälter samt Boss resultieren unterschiedliche Ausdehnungskoeffizienten der einzelnen Schichten, die bei Temperaturänderungen zu einem Auftreten eines Spaltes zwischen den Schichten des Druckbehälters führen können. Auch kann ein Spalt bereits bei der Herstellung entstehen. Ob und in welcher Ausdehnung dieser Spalt auftritt, kann bei jedem Druckbehälter variieren, weshalb nach einer Erstbefüllung eines jeden Druckbehälters, oder bei dessen fortwährendem Gebrauch, eine Diagnose, ob sich ein Spalt gebildet hat, indiziert sein kann. Vor diesem Hintergrund ist es eine Aufgabe der vorliegenden Erfindung, ein Verfahren bereitzustellen, das die Vermeidung einer Spaltbildung zwischen den Schichten eines Druckbehälters gewährleistet. Ferner ist es eine Aufgabe der vorliegenden Erfindung, einen entsprechenden Druckbehälter zur Verfügung zu stellen.

Zur Lösung der voranstehenden Aufgabe wird ein Verfahren zur Herstellung eines Druckbehälters gemäss Anspruch 1 vorgeschlagen, wobei der Druckbehälter mehrere Schichten aufweist und ein zylindrisches Mittelteil mit zwei gewölbten Seitenteilen umfasst, wobei mindestens ein Seitenteil eine Einfüllöffnung aufweist, gekennzeichnet dadurch, dass zwischen mindestens zwei Schichten des Druckbehälters in mindestens einem flächigen Bereich ein Fügemittel eingebracht wird, welches eine weitere Schicht bildet und auftretende Kräfte zwischen den mindestens zwei Schichten des Druckbehälters innerhalb dieser weiteren Schicht kompensiert und eine Spaltbildung an diesem mindestens einen flächigen Bereich unterbindet. Bei dem erfindungsgemäßen Verfahren wird bei dem mindestens einen Seitenteil mit Einfüllöffnung ein Eingangskörper eingefügt, welcher dadurch jeweils eine Grenzfläche zu mindestens zwei Schichten des Druckbehälters bildet, und es wird auf die so gebildeten jeweiligen Grenzflächen zumindest bereichsweise das Fügemittel als weitere Schicht aufgebracht. Das Fügemittel bindet durch seine Klebeeigenschaften in einem flächigen Bereich den Eingangskörper an mindestens zwei Schichten des mindestens einen Seitenteils. Es ist denkbar, dass das Fügemittel außerhalb der Grenzfläche zum Eingangskörper zusätzlich in einem flächigen Bereich zwischen zwei Schichten des Seitenteils eingebracht wird. Bei dem Verfahren wird eine Schichtdicke der weiteren Schicht bevorzugt zwischen 0,3 mm und 3,5 mm zwischen den jeweiligen Grenzflächen, insbesondere im Bereich des Eingangskörpers, erzeugt.

Die Dicke der Schicht kann über den Verlauf der Grenzflächen variieren, insbesondere in dem Bereich der Grenzflächen, in dem der Eingangskörper nicht mehr angeordnet ist, auf bis zu 0 mm absinken.

Eine Klebeeigenschaft des Fügemittels unterbindet dabei das Abreißen der Schichten, zwischen die es eingefügt wurde. Damit einhergehend werden zwischen den angrenzenden Schichten auftretende Spitzen in Spannungskräften, welche aus einer Scherkraft und/oder einer Torsionskraft bestehen können, innerhalb der Schicht des Fügemittels kompensiert. Die Spaltbildung ist so im flächigen Bereich der eingebrachten Schicht des Fügemittels nicht möglich, bzw. endet an diesen Stellen.

In einer weiteren Ausführungsform des erfindungsgemäßen Verfahrens wird bei dem Seitenteil ohne Einfüllöffnung ein Zentrierkörper eingefügt, welcher dadurch jeweils eine Grenzfläche zu mindestens zwei Schichten des Druckbehälters bildet, und es wird auf die so gebildeten jeweiligen Grenzflächen zumindest bereichsweise das Fügemittel als weitere Schicht aufgebracht. Der Zentrierkörper kann über zentral angebrachte Bohrungen verfügen, in die jeweilig eine innere Schicht eingreift oder jeweilig der Druckbehälter auf seiner zylindrischen Drehachse ausgerichtet werden kann. Das Fügemittel bindet durch seine Klebeeigenschaften in einem flächigen Bereich den Zentrierkörper an mindestens zwei Schichten des Seitenteils. Es ist denkbar, dass das Fügemittel außerhalb der Grenzfläche zum Zentrierkörper zusätzlich in einem flächigen Bereich zwischen zwei Schichten des Seitenteils eingebracht wird.

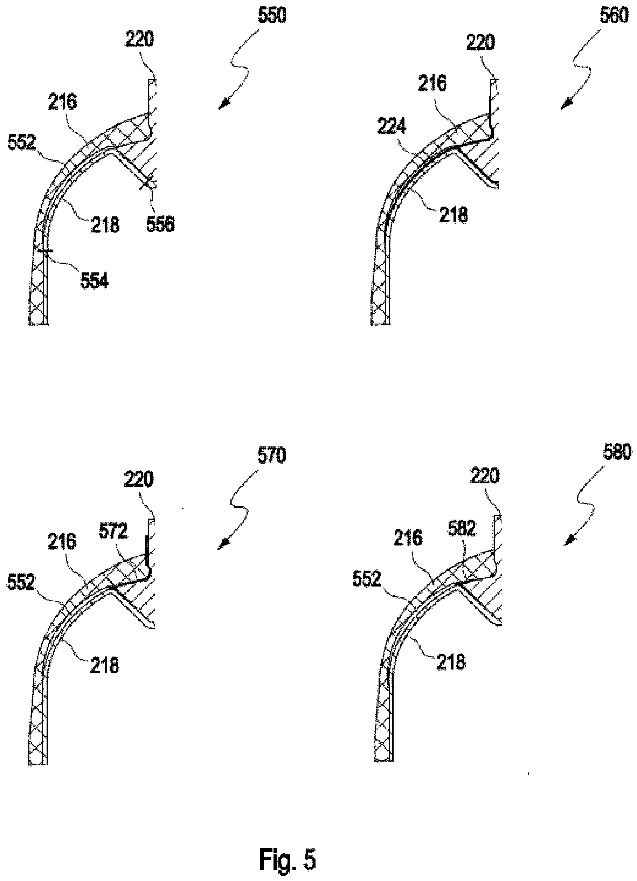

In einer Ausführungsform des erfindungsgemäßen Verfahrens wird der mindestens eine flächige Bereich, in dem das Fügemittel eine Schicht bildet, explizit so ausgestaltet, dass er mindestens einen möglichen Mangel wie Korrosion, Materialsprünge, bzw. zu Materialsprüngen führende Spannungsspitzen unterbindet (siehe Figur 5).

In einer Ausführungsform des erfindungsgemäßen Verfahrens wird das Fügemittel zwischen mindestens zwei Schichten eines Druckbehälters eingebracht, bei dem die äußerste Schicht des Druckbehälters aus einem Kunstharz, insbesondere einem Epoxidharz, zusammen mit einer Kohlefaser gebildet wird, einem sogenannten CFK, also ein kohlenfaserverstärkter Kunststoff, und mindestens eine innere Schicht aus einem Kunststoff, insbesondere PA6.6, gebildet wird. Dementsprechend ist ein solches Fügemittel zu wählen, welches Klebeeigenschaften betreffend der zur Schichtbildung verwendeten Materialen der mindestens zwei Schichten des Druckbehälters, zwischen die es eingebracht wird, besitzt.

In einer weiteren Ausführungsform des erfindungsgemäßen Verfahrens wird der in das jeweilige Seitenteil eingefügte jeweilige Eingangskörper bzw. Zentrierkörper aus einem Metall, insbesondere Aluminium, gebildet. Dieses Metall kann zumindest teilweise mit einem Lackierungsverfahren, insbesondere einem in Kurzform als KTL bezeichneten kathodischen Tauchlackverfahren, beschichtet werden.

In einer weiteren Ausführungsform des erfindungsgemäßen Verfahrens wird das Fügemittel aus einer Liste der folgenden Materialien gewählt: Sikaflex^{®} 222i UV, Henkel Loctite^{®}, Henkel Teroson^{®} RB 3225. Die genannten möglichen Fügemittel sind vorteilhaft für eine Verklebung der voranstehend genannten Materialien CFK und Aluminium mit KTL geeignet. Insbesondere haben sie die Funktion, vor einem Abriss der KTL-Schicht vom Aluminium zu schützen, einen Korrosionsschutz zu verbessern und isolierend zu wirken. Im Bereich eines Aufeinandertreffens der mindestens zwei Schichten mit dem Eingangs- bzw. Zentrierkörper tragen sie dazu bei, einen sogenannten harten Übergang (CFK - PA6.6 - Metall) zu vermeiden, d.h. Spannungsspitzen werden abgebaut. Auch andere als die genannten Fügemittel sind denkbar, die die geforderten Klebeeigenschaften zu den zum Schichtaufbau des Druckbehälters verwendeten Materialien besitzen.

Es wird ein Druckbehälter gemäss Anspruch 5 beansprucht, der mehrere Schichten aufweist und einen zylindrischen Mittelteil mit zwei gewölbten Seitenteilen umfasst, wobei mindestens ein Seitenteil eine Einfüllöffnung aufweist, und bei dem zwischen mindestens zwei Schichten in mindestens einem flächigen Bereich ein Fügemittel eingebracht ist, welches eine weitere Schicht bildet und dazu ausgelegt ist, auftretende Kräfte zwischen den mindestens zwei Schichten des Druckbehälters innerhalb dieser weiteren Schicht zu kompensieren und eine Spaltbildung zu unterbinden.

Dabei wird ein Druckbehälter beansprucht, der mindestens ein Seitenteil mit Einfüllöffnung umfasst, und bei dem ein Eingangskörper in das Seitenteil eingefügt ist, wodurch jeweils eine Grenzfläche zu mindestens zwei Schichten des Druckbehälters gebildet ist, wobei auf die so gebildeten jeweiligen Grenzflächen zumindest bereichsweise das Fügemittel als weitere Schicht aufgebracht ist.

Schließlich wird in weiterer Ausgestaltung ein Druckbehälter beansprucht, bei dem in das Seitenteil ohne Einfüllöffnung ein Zentrierkörper eingefügt ist, wodurch jeweils eine Grenzfläche zu mindestens zwei Schichten des Druckbehälters gebildet ist, wobei auf die so gebildeten jeweiligen Grenzflächen zumindest bereichsweise das Fügemittel als weitere Schicht aufgebracht ist.

Der Eingangskörper des beanspruchten Druckbehälters weist für eine gute thermische Isolation des Eingangskörpers sowie für eine Vermeidung oder Reduktion von relativen Bewegungen zwischen Eingangskörper und äußerer sowie innerer Schicht folgende Schichtdicke bei der Bedeckung des Eingangskörpers als weitere Schicht auf, wobei bezogen auf die nachfolgend aufgeführten Schichtdicken der Außendurchmesser des Eingangskörpers maximal 85 mm, insbesondere 30 bis 85 mm, ist:

| **Schichtdicke der weiteren Schicht (in mm) im Bereich des Eingangskörpers** | **Bevorzugtes Material der weiteren Schicht** | **Eigenschaft (thermische Isolation; Vermeidung/Reduktion von relativer Bewegung) / Ergebnis Versuche** |
|---|---|---|
| kleiner 0,3 | Elastomer oder Duromere | Weniger oder nicht ausgeprägt / eher negativ |
| größer 3,5 | Elastomer oder Duromere | Weniger oder nicht ausgeprägt / eher negativ |
| 0,3 bis 3,5 | Elastomer oder Duromere | Besonders positiv ausgeprägte Eigenschaft & positiver Effekt / besonders positives Ergebnis |

Ein Eingangskörper ist auch unter dem Begriff Boss bekannt. Die maximale Schichtdicke der weiteren Schicht ist etwa 15 mm. Die minimale Schichtdicke der weiteren Schicht ist 0 mm.

Bei dem beanspruchten Druckbehälter ist der Eingangskörper mit einer Schichtdicke der weiteren Schicht von 0,3 bis 3,5 mm bedeckt, wobei die Schicht selbst bevorzugt ein Elastomer oder Duromere ist. Duromere sind auch unter dem Begriff Duroplaste bekannt. Die weitere Schicht ist somit zwischen den gebildeten jeweiligen Grenzflächen im Sinne der Erfindung angeordnet. Die weitere Schicht kann in einem Randbereich, in dem kein Eingangskörper mehr angeordnet ist und in dem die Grenzflächen noch vorhanden sind, auf bis zu 0,3 mm oder bis zu 0 mm reduziert werden.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

In den folgenden Figuren wird das erfindungsgemäße Verfahren beispielhaft anhand eines Druckbehälters mit zwei Schichten aufgezeigt, dessen äußere Schicht einen Außenbehälter und dessen innere Schicht einen Innenbehälter definiert. Das erfindungsgemäße Verfahren ist aber nicht beschränkt auf diese Ausführungsform, sondern kann in gleicher Weise auch in Druckbehältern mit mehr als zwei Schichten zur Anwendung kommen.

Die Figuren werden zusammenhängend und übergreifend beschrieben, gleichen Komponenten sind dieselben Bezugszeichen zugeordnet.
Figur 1 zeigt in schematischer Darstellung eine Außenansicht einer Ausführungsform eines Druckbehälters, wie er mit einer Ausführungsform des erfindungsgemäßen Verfahrens hergestellt wird.
Figur 2 zeigt in schematischer Darstellung in der oberen Hälfte einen Schnitt durch eine weitere Ausführungsform eines erfindungsgemäßen Druckbehälters, wie er mit einer weiteren Ausführungsform des erfindungsgemäßen Verfahrens hergestellt wird.
Figur 3 zeigt in schematischer Darstellung eine vergrößerte Schnittzeichnung im Bereich eines Eingangskörpers, bei dem eine Schicht eines Fügemittels gemäß einer anderen Ausführungsform des erfindungsgemäßen Verfahrens eingebracht ist.
Figur 4 zeigt in schematischer Darstellung eine vergrößerte Schnittzeichnung im Bereich eines Zentrierkörpers, bei dem eine Schicht eines Fügemittels gemäß einer anderen Ausführungsform des erfindungsgemäßen Verfahrens eingebracht ist.
Figur 5 zeigt in schematischer Darstellung mehrere Schnittbilder im Bereich einer Spaltbildung, bei denen neben einer Spaltbildung auch mehrere mögliche Bereiche für die Einbringung einer Schicht eines Fügemittels gemäß einer weiteren Ausführungsform des erfindungsgemäßen Verfahrens veranschaulicht werden.

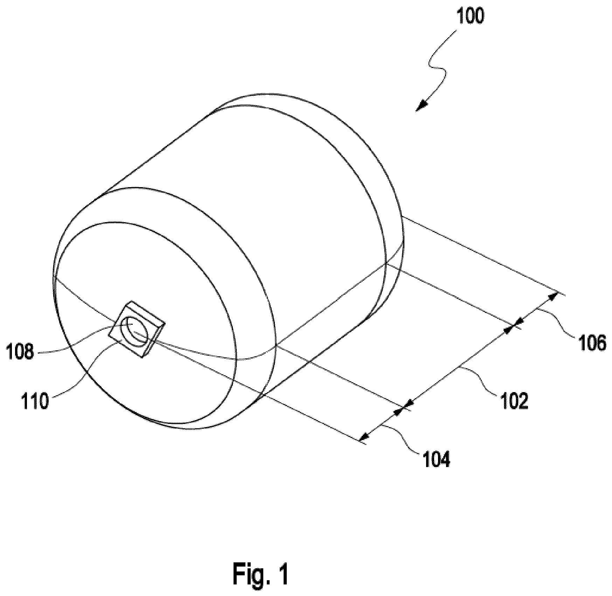

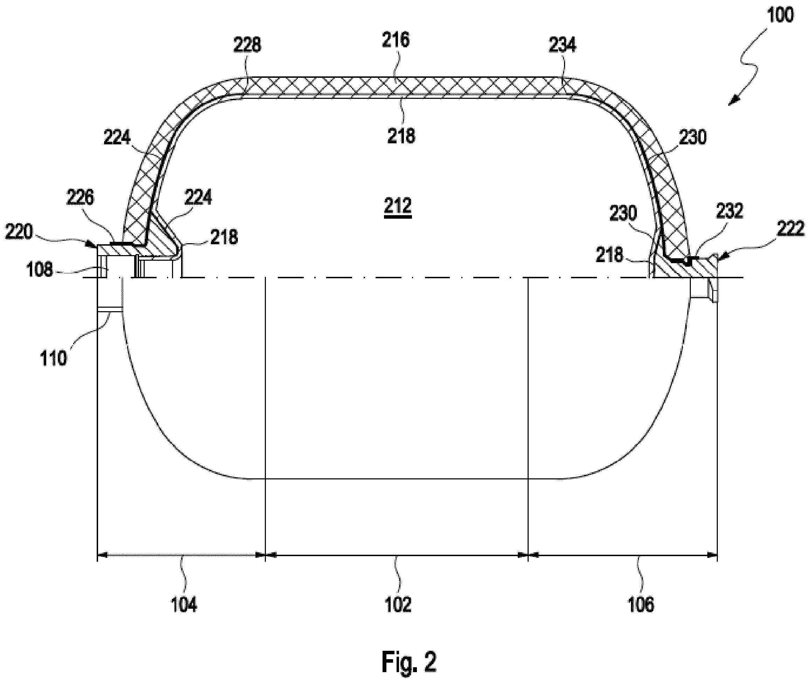

In Figur 1 ist in schematischer Darstellung eine Außenansicht eines Druckbehälters 100, wie er gemäß einer Ausführungsform des erfindungsgemäßen Verfahrens hergestellt ist, gezeigt. Ein zylindrisches Mittelteil in einem Bereich 102 wird zu beiden Seiten jeweils von einem gewölbten Seitenteil, in einem jeweiligen Bereich 104 und 106, abgeschlossen. An dem hier sichtbaren vorderen Seitenteil befindet sich ein Eingangskörper, ein sogenannter Boss, mit einer Zugangsöffnung 108, über die ein Gasaustausch mit dem Druckbehälter vollzogen wird. Am Rand 110 der Zugangsöffnung 108 kann sich ein Fügemittel befinden (siehe Bezugszeichen 226 in Figur 2). Im hier nicht vollständig sichtbaren hinteren Seitenteil im Bereich 106 kann sich ebenfalls ein Eingangskörper zum Gasaustausch befinden.

Es ist aber auch eine Bauweise mit einem Zentrierkörper (siehe Bezugszeichen 222 in Figur 2) oder einer geschlossenen Fläche möglich.

In Figur 2 ist in schematischer Darstellung im oberen Teil ein Schnitt durch eine obere Hälfte eines erfindungsgemäßen Druckbehälters gezeigt. Im unteren Teil ist eine Außenansicht des Druckbehälters 100 aus Figur 1 dargestellt. Der zylindrische Mitteilteil im Bereich 102 und die beiden Seitenteile in den Bereichen 104 und 106 weisen zwei Schichten, eine äußere Schicht 216 und eine innere Schicht 218 auf. Die äußere Schicht 216 kann aus einem kohlefaserverstärktem Kunststoff bestehen. Die innere Schicht 218 kann aus einem Kunststoff PA6.6 gefertigt sein. In dem vorderen Seitenteil, in der Figur 2 auf der linken Seite im Bereich 104, befindet sich ein Eingangskörper 220, der aus einem Metall, bspw. Aluminium, bestehen kann. Er weist eine Zugangsöffnung 108 auf, über die der Gasaustausch mit dem Innenraum 212 des Druckbehälters vollzogen wird. In dem hinteren Seitenteil, in der Figur 2 auf der rechten Seite im Bereich 106, befindet sich ein Zentrierkörper 222. Dem erfindungsgemäßen Verfahren folgend, befindet sich in dem Bereich 104 zwischen der äußeren Schicht 216, der inneren Schicht 218, sowie dem Eingangskörper 220 eine durch ein Fügemittel gebildete Schicht 224. Die Schicht 224 des Fügemittels ragt an der Stelle 226 am Rand 110 des Eingangskörpers hervor und erstreckt sich zwischen der äußeren Schicht 216 und der inneren Schicht 218 bis zu einer Stelle 228 im Bereich des linken Ansatzes des zylindrischen Mittelteils, welches den Bereich 102 ausmacht. Eine Schichtdicke des Fügemittels kann dabei variieren. Vorteilhaft weist die Schichtdicke des Fügemittels ab der Stelle 226 am Rand 110 des Eingangskörpers 220 etwa 3 mm oder mehr auf, welche sich auslaufend zu der Stelle 228 bis auf 0 mm reduziert, wodurch ein möglicher Spalt komplett ausgefüllt wird. In gleicher Weise befindet sich in dem Bereich 106 zwischen der äußeren Schicht 216, der inneren Schicht 218 sowie dem Zentrierkörper 222 eine durch ein Fügemittel gebildete Schicht 230. Die Schicht 230 des Fügemittels ragt an der Stelle 232 am Rand des Zentrierkörpers 222 hervor und erstreckt sich zwischen der äußeren Schicht 216 und der inneren Schicht 218 bis zu einer Stelle 234 im Bereich des rechten Ansatzes des zylindrischen Mittelteils, welches den Bereich 102 ausmacht. Vorteilhaft weist auch hier die Schichtdicke des Fügemittels ab der Stelle 232 am Rand des Zentrierkörpers 222 etwa 3 mm oder mehr auf, welche sich auslaufend zu der Stelle 234 bis auf 0 mm reduziert, wodurch ein möglicher Spalt komplett ausgefüllt wird. Besonders bevorzugt weisen die Schichten 224, 230 eine Schichtdicke zwischen 0,3 mm und 3,5 mm über deren Verlauf auf, wenn der maximale Außendurchmesser des Eingangskörpers 85 mm, insbesondere 30 bis 85 mm, ist.

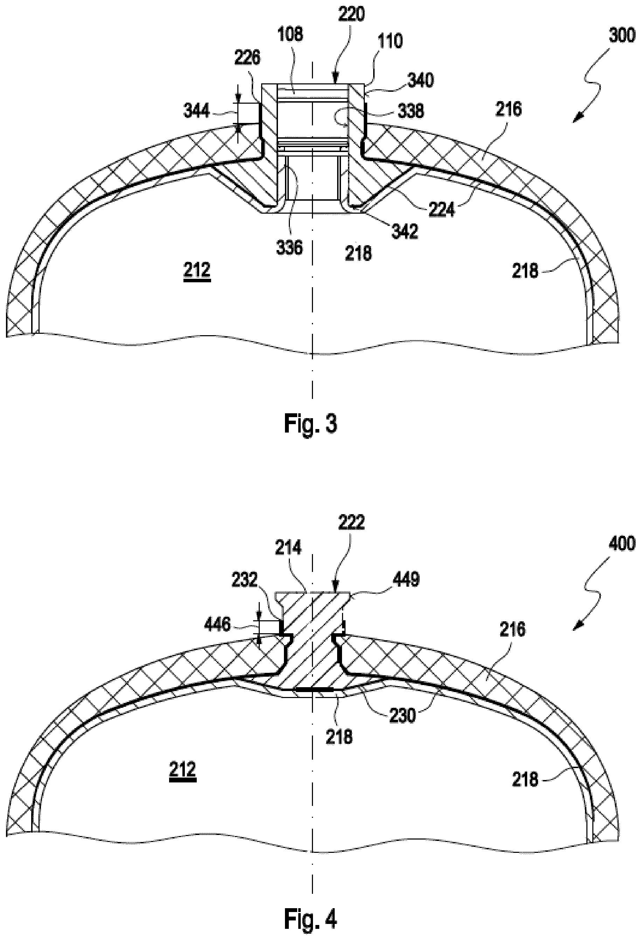

In Figur 3 wird in schematischer Darstellung eine vergrößerte Schnittzeichnung 300 im Bereich des Eingangskörpers 220, bei der eine Schicht eines Fügemittels gemäß dem erfindungsgemäßen Verfahren eingebracht ist, gezeigt. Genauer wird hier definiert, dass die Schicht 224 des Fügemittels in einer Ausdehnung 344 von etwa 5 mm oder mehr am Rand des Eingangskörpers 220 bis zu einer Stelle 226 hervorragt. Der Eingangskörper 220, der bspw. aus Aluminium bestehen kann, weist auf seiner "äußeren" Oberfläche 340 eine Beschichtung mittels kathodischer Tauchlackierung (KTL), auf, während seine "innere" Oberfläche 338 keine Beschichtung mit einem Lack aufweist. Die Schicht 224 des Fügemittels kann sich dabei zwischen der inneren Schicht 218 und dem Eingangskörper 220 bis zu einer Stelle 342 erstrecken.

In Figur 4 wird in schematischer Darstellung eine vergrößerte Schnittzeichnung 400 im Bereich des Zentrierkörpers 222, bei der eine Schicht eines Fügemittels gemäß dem erfindungsgemäßen Verfahren eingebracht ist, gezeigt. Genauer wird hier definiert, dass die Schicht 230 des Fügemittels in einer Ausdehnung 446 von etwa 5 mm oder mehr am Rand des Zentrierkörpers 222 bis zu einer Stelle 232 hervorragt. Der Zentrierkörper 222, der bspw. aus Aluminium bestehen kann, weist auf seiner "äußeren" Oberfläche 449 eine Beschichtung mittels kathodischer Tauchlackierung (KTL), auf. Die Schicht 230 des Fügemittels kann sich dabei zwischen der inneren Schicht 218 und dem Eingangskörper 220 erstrecken.

In Figur 5 werden in schematischer Darstellung mehrere Schnittbilder im Bereich einer Spaltbildung, bei denen neben einer Spaltbildung auch mehrere mögliche Bereiche für die Einbringung einer Schicht eines Fügemittels gemäß dem erfindungsgemäßen Verfahren veranschaulicht. Dies wird beispielhaft im Bereich eines Seitenteils, das einen Eingangskörper 220 aufweist, aufgezeigt. Bild 550 zeigt einen gebildeten Spalt 552, der sich von einer Stelle 554 bis zu einer Stelle 556 erstreckt und der sich zwischen der äußeren Schicht 216 und der inneren Schicht 218, bzw. zwischen dem Eingangskörper 220 und der inneren Schicht 218 gebildet hat. Bild 560 zeigt eine maximalen Bereich, in dem eine Schicht 224 eines Fügemittels zwischen äußerer Schicht 216, innerer Schicht 218 und Eingangskörper 220 eingebracht wurde. Bild 570 zeigt einen zur Vermeidung einer Korrosion notwendigen minimalen Bereich 572 zur Bildung einer Schicht eines Fügemittels, der im Wesentlichen einen Stoffaustausch mit der Umgebung unterbinden soll. Es verbleibt weiterhin ein Spalt 552 zwischen äußerer Schicht 216 und innerer Schicht 218. Schließlich zeigt Bild 580 einen zur Vermeidung einer Spannungsspitze notwendigen minimalen Bereich 582, der im Wesentlichen Bewegungen an einer Stelle des Zusammentreffens von äußerer Schicht 216 aus CFK, innerer Schicht 218 aus PA6.6 und Eingangskörper 220 aus Aluminium mit oder ohne KTL, unterbinden soll. Bis auf diesen Bereich mit Fügemittel verbleibt weiterhin ein Spalt 552 zwischen äußerer Schicht 216 und innerer Schicht 218.

## Patentansprüche

1. Verfahren zur Herstellung eines Druckbehälters (100), der mehrere Schichten aufweist und ein zylindrisches Mittelteil mit zwei gewölbten Seitenteilen umfasst, wobei mindestens ein Seitenteil eine Einfüllöffnung (108) aufweist, **gekennzeichnet dadurch, dass** zwischen mindestens zwei Schichten (216, 218) des Druckbehälters (100) in mindestens einem flächigen Bereich ein Fügemittel eingebracht wird, welches eine weitere Schicht (224, 230) bildet und auftretende Kräfte zwischen den mindestens zwei Schichten (216, 218) des Druckbehälters (100) innerhalb dieser weiteren Schicht (224, 230) kompensiert und eine Spaltbildung (552) an diesem mindestens einen flächigen Bereich unterbindet, wobei zur Bildung des mindestens einen Seitenteils mit Einfüllöffnung ein Eingangskörper (220) in das Seitenteil eingefügt wird und dieser dadurch jeweils eine Grenzfläche zu mindestens zwei Schichten (216, 218) des Druckbehälters (100) bildet, wobei auf die so gebildeten jeweiligen Grenzflächen zumindest bereichsweise das Fügemittel als weitere Schicht (224) aufgebracht wird,
**dadurch gekennzeichnet, dass** die weitere Schicht (224) des Fügemittels zur Bedeckung des Eingangskörpers (220) eine Schichtdicke von 0,3 mm bis 3,5 mm, insbesondere im Bereich des Eingangskörpers (220), aufweist, und wobei der Eingangskörper (220) einen Außendurchmesser von maximal 85 mm, insbesondere 30 bis 85 mm, aufweist.

2. Verfahren nach Anspruch 1, bei dem zur Bildung eines Seitenteils ohne Einfüllöffnung ein Zentrierkörper (222) in das Seitenteil eingefügt wird und dieser dadurch jeweils eine Grenzfläche zu mindestens zwei Schichten (216, 218) des Druckbehälters (100) bildet, wobei auf die so gebildeten jeweiligen Grenzflächen zumindest bereichsweise das Fügemittel als weitere Schicht (230) aufgebracht wird.

3. Verfahren nach Anspruch 1 oder 2, bei dem das Fügemittel zwischen mindestens zwei Schichten (216, 218) eines Druckbehälters (100) eingebracht wird, bei dem die äußerste Schicht (216) aus einem Kunstharz, insbesondere einem Epoxidharz, zusammen mit einer Kohlefaser gebildet wird, und mindestens eine innere Schicht (218) aus einem Kunststoff, insbesondere PA6.6 gebildet wird.

4. Verfahren nach einem der voranstehenden Ansprüche, bei dem der in das jeweilige Seitenteil eingefügte Eingangskörper (220) bzw. Zentrierkörper (222) aus einem Metall, insbesondere Aluminium, gebildet wird, welches zumindest teilweise mit einem Lackierungsverfahren, insbesondere einem kathodischen Tauchlackverfahren, beschichtet wurde

5. Druckbehälter (100), der mehrere Schichten (216, 218) aufweist und einen zylindrischen Mittelteil mit zwei gewölbten Seitenteilen umfasst, wobei mindestens ein Seitenteil eine Einfüllöffnung (108) aufweist, und bei dem zwischen mindestens zwei Schichten (216, 218) in mindestens einem flächigen Bereich ein Fügemittel eingebracht ist, welches eine weitere Schicht (224, 230) bildet und dazu ausgelegt ist, auftretende Kräfte zwischen den mindestens zwei Schichten (216, 218) des Druckbehälters (100) innerhalb dieser weiteren Schicht (224, 230) zu kompensieren und eine Spaltbildung (552) zu unterbinden, wobei der Druckbehälter (100) mindestens ein Seitenteil mit Einfüllöffnung umfasst, bei dem ein Eingangskörper (220) in das Seitenteil eingefügt ist, wodurch jeweils eine Grenzfläche zu mindestens zwei Schichten (216, 218) des Druckbehälters (100) gebildet ist, wobei auf die so gebildeten jeweiligen Grenzflächen zumindest bereichsweise das Fügemittel als weitere Schicht (224) aufgebracht ist, **dadurch gekennzeichnet, dass** die weitere Schicht (224) des Fügemittels zur Bedeckung des Eingangskörpers (220) eine Schichtdicke von 0,3 mm bis 3,5 mm, insbesondere im Bereich des Eingangskörpers (220), aufweist, und wobei der Eingangskörper (220) einen Außendurchmesser von maximal 85 mm, insbesondere 30 bis 85 mm, aufweist.

6. Druckbehälter nach Anspruch 5, bei dem in ein Seitenteil ohne Einfüllöffnung ein Zentrierkörper (222) eingefügt ist, wodurch jeweils eine Grenzfläche zu mindestens zwei Schichten (216, 218) des Druckbehälters (100) gebildet ist, wobei auf die so gebildeten jeweiligen Grenzflächen zumindest bereichsweise das Fügemittel als weitere Schicht (230) aufgebracht ist.

## Claims

1. Method for producing a pressure container (100) having multiple layers and comprising a cylindrical central part with two curved side parts, wherein at least one side part has a filling opening (108), **characterized in that** a joining means is introduced between at least two layers (216, 218) of the pressure container (100) in at least one flat region, which forms a further layer (224, 230) and compensates for forces occurring between the at least two layers (216, 218) of the pressure container (100) within this further layer (224, 230) and prevents the formation of a gap (552) in this at least one flat region, wherein for forming the at least one side part with filling opening an inlet body (220) is inserted into the side part and thereby forms in each case an interface with at least two layers (216, 218) of the pressure container (100), wherein the joining means is applied at least in regions to the thus formed interfaces as a further layer (224),
**characterized in that** the further layer (224) of the joining means for covering the inlet body (220) has a layer thickness of 0.3 mm to 3.5 mm, in particular in the region of the inlet body (220), and wherein the inlet body (220) has an outer diameter of at most 85 mm, in particular 30 to 85 mm.

2. Method according to claim 1, in which for forming a side part without a filling opening a centering body (222) is inserted into the side part and thereby forms in each case an interface with at least two layers (216, 218) of the pressure container (100), wherein the joining means is applied at least in regions to the thus formed interfaces as a further layer (230).

3. Method according to claim 1 or 2, in which the joining means is introduced between at least two layers (216, 218) of a pressure container (100), in which the outermost layer (216) is formed from a synthetic resin, in particular an epoxy resin, together with a carbon fiber, and at least one inner layer (218) is formed from plastic, in particular PA6.6.

4. Method according to any one of the preceding claims, in which the inlet body (220) or centering body (222) inserted into the respective side part is formed from a metal, in particular aluminum, which has been coated at least partially with a painting method, in particular a cathodic dip painting method.

5. Pressure container (100) having multiple layers (216, 218) and comprising a cylindrical central part with two curved side parts, wherein at least one side part has a filling opening (108), and in which a joining means is introduced between at least two layers (216, 218) in at least one flat region, which forms a further layer (224, 230) and is designed to compensate for forces occurring between the at least two layers (216, 218) of the pressure container (100) within this further layer (224, 230) and to prevent the formation of a gap (552), wherein the pressure container (100) comprises at least one side part with filling opening, in which an inlet body (220) is inserted into the side part, whereby forming in each case an interface with at least two layers (216, 218) of the pressure container (100), wherein the joining means is applied at least in regions to the thus formed interfaces as a further layer (224), **characterized in that**
the further layer (224) of the joining means for covering the inlet body (220) has a layer thickness of 0.3 mm to 3.5 mm, in particular in the region of the inlet body (220), and
wherein the inlet body (220) has an outer diameter of at most 85 mm, in particular 30 to 85 mm.

6. Pressure container according to claim 5, in which a centering body (222) is inserted into a side part without a filling opening, whereby forming in each case an interface with at least two layers (216, 218) of the pressure container (100), wherein the joining means is applied at least in regions to the thus formed interfaces as a further layer (230).

## Revendications

1. Procédé de fabrication d'un récipient sous pression (100) qui présente plusieurs couches et comprend une partie centrale cylindrique avec deux parties latérales incurvées, dans lequel au moins une partie latérale présente une ouverture de remplissage (108), **caractérisé en ce qu'**entre au moins deux couches (216, 218) du récipient sous pression (100) dans au moins une zone plane, laquelle forme une couche supplémentaire (224, 230) et compense des forces apparaissant entre les au moins deux couches (216, 218) du récipient sous pression (100) à l'intérieur de cette couche supplémentaire (224, 230) et empêche une formation de fente (552) dans cette au moins une zone plane, dans lequel un corps d'entrée (220) est inséré dans la partie latérale pour former l'au moins une partie latérale avec ouverture de remplissage et celui-ci forme ainsi une interface avec au moins deux couches (216, 218) du récipient sous pression (100), dans lequel le produit d'assemblage est appliqué au moins par zones sur les interfaces respectives ainsi formées en tant que couche supplémentaire (224),
**caractérisé en ce que** la couche supplémentaire (224) du produit d'assemblage destinée à couvrir le corps d'entrée (220) présente une épaisseur de couche de 0,3 mm à 3,5 mm, en particulier au niveau du corps d'entrée (220), et dans lequel le corps d'entrée (220) présente un diamètre extérieur de maximum 85 mm, en particulier de 30 à 85 mm.

2. Procédé selon la revendication 1, dans lequel, pour former une partie latérale sans ouverture de remplissage, un corps de centrage (222) est inséré dans la partie latérale et forme ainsi une interface avec au moins deux couches (216, 218) du récipient sous pression (100), dans lequel le produit d'assemblage est appliqué au moins par zones sur des interfaces respectives ainsi formées en tant que couche supplémentaire (230).

3. Procédé selon la revendication 1 ou 2, dans lequel le produit d'assemblage est introduit entre au moins deux couches (216, 218) d'un récipient sous pression (100), dans lequel la couche la plus extérieure (216) est formée d'une résine synthétique, en particulier d'une résine époxy conjointement avec une fibre de carbone, et au moins une couche intérieure (218) est formée d'une matière plastique, en particulier de PA6.6.

4. Procédé selon l'une quelconque des revendications précédentes, dans lequel le corps d'entrée (220) ou le corps de centrage (222) inséré dans la partie latérale respective est formé d'un métal, en particulier d'aluminium, lequel a été au moins partiellement revêtu par un procédé de peinture, en particulier un procédé de peinture par immersion cathodique.

5. Récipient sous pression (100) qui présente plusieurs couches (216, 218) et comprend une partie centrale cylindrique avec deux parties latérales incurvées, dans lequel au moins une partie latérale présente une ouverture de remplissage (108), et dans lequel, entre au moins deux couches (216, 218) dans au moins une zone plane, un produit d'assemblage est introduit, lequel forme une couche supplémentaire (224, 230) et est conçu pour compenser des forces apparaissant entre les au moins deux couches (216, 218) du récipient sous pression (100) à l'intérieur de cette couche supplémentaire (224, 230) et empêcher une formation de fente (552), dans lequel le réservoir sous pression (100) comprend au moins une partie latérale avec ouverture de remplissage, dans lequel un corps d'entrée (220) est inséré dans la partie latérale, moyennant quoi respectivement une interface est formée avec au moins deux couches (216, 218) du réservoir sous pression (100), dans lequel le produit d'assemblage est appliqué au moins par zones sur des interfaces respectives ainsi formées en tant que couche supplémentaire (224), **caractérisé en ce que**
la couche supplémentaire (224) du produit d'assemblage destinée à couvrir le corps d'entrée (220) présente une épaisseur de couche de 0,3 mm à 3,5 mm, en particulier au niveau du corps d'entrée (220), et
dans lequel le corps d'entrée (220) présente un diamètre extérieur de maximum 85 mm, en particulier de 30 à 85 mm.

6. Récipient sous pression selon la revendication 5, dans lequel un corps de centrage (222) est inséré dans une partie latérale sans ouverture de remplissage, moyennant quoi respectivement une interface est formée avec au moins deux couches (216, 218) du récipient sous pression (100), dans lequel le produit d'assemblage est appliqué au moins par zones sur des interfaces respectives ainsi formées en tant que couche supplémentaire (230).
